Europäisches Patentamt

European Patent Office

Office européen des brevets

(11) Publication number:

**0 356 662**

**A2**

(12) **EUROPEAN PATENT APPLICATION**

(21) Application number: **89112583.3**

(22) Date of filing: **10.07.89**

(51) Int. Cl.5: **G05B 19/10**

(30) Priority: **02.09.88 IT 4576088**

(43) Date of publication of application:
**07.03.90 Bulletin 90/10**

(84) Designated Contracting States:
**DE ES FR GB IT SE**

(71) Applicant: **INDUSTRIE ZANUSSI S.p.A.**
**Via Giardini Cattaneo 3**
**I-33170 Pordenone(IT)**

(72) Inventor: **Russo, Fernando**
**via Spallanzani 22**
**I-33170 Pordenone(IT)**

(74) Representative: **Kirschner, Klaus Dieter et al**
**Patentanwälte Herrmann-Trentepohl**
**Kirschner Grosse Bockhorni Forstenrieder**
**Allee 59**
**D-8000 München 71(DE)**

(54) **Device for selecting operation cycles in electrical domestic appliances, in particular clothes washing and/or drying machines, cookers and similar appliances.**

(57) Device for selecting operation cycles in electrical domestic appliances, in particular clothes washing and/or drying machines, cookers and similar appliances.

Device comprising a transmitter element (3) associated with a keyboard (5) for setting the selected cycles or entering the input data relating to cycle parameters, said keyboard being interconnected with a transmitting circuit (7) through a microprocessor (8), and comprising also a receiver element (4) located in the associated appliance and provided with a receiving circuit (12), which is capable of receiving the signals transmitted by the transmitter element (3) and therefore determining, via a microprocessor (14) and a power interface (13), the proper execution of the cycles selected through the buttons (6) on the keyboard (5).

fig. 2

# DEVICE FOR SELECTING OPERATION CYCLES IN ELECTRICAL DOMESTIC APPLIANCES, IN PARTICULAR CLOTHES WASHING AND/OR DRYING MACHINES, COOKERS AND SIMILAR APPLIANCES

The present invention relates to a device for selecting operation cycles to be performed by electrical domestic appliances, in particular clothes washing and/or drying machines, said device being capable of being used in combination with each one of said appliances to enable their working cycles to be selected from remote locations with respect to the concerned appliances.

Remote control devices are known for the selection of working cycles of electrical domestic appliances, such as clothes washing and/or drying machines, cookers and similar appliances, which comprise a transmitter element associated with user-operated selection push-buttons and capable of generating ultrasonic or infrared signals according to the particular push-buttons being operated by the user, and which also comprise a receiver element mounted on the control panel of the associated appliance and capable of receiving the signals sent by the transmitter element in order to determine the automatic performance of the cycles as selected by the user.

Such remote control devices enable working cycles to be selected, which are suitable for washing and/or drying, or respectively cooking, pre-established quantities of clothes, or respectively food of various kinds by cycling on and off in proper sequence the electrical components provided to control and/or perform the functions of the electrical domestic appliances concerned.

On the other hand, when different quantities and kinds of clothes to be washed and/or dried, or respectively food to be cooked, are being handled, said remote control devices do not enable cycles to be selected in an optimum way with reference to the particular load of clothes or food to be handled, as it would however be desirable in these cases in view of achieving the best possible washing and/or drying or, respectively, cooking results, with the lowest energy consumption and the shortest duration of the working cycles themselves.

It is therefore the purpose of the present invention to overcome the above mentioned drawbacks and limitations by means of a device for the selection of operation cycles of electrical domestic appliances, which is capable of enabling optimum cycles to be set for any kind and quantity of clothes to be washed and/or dried or, respectively, food to be cooked.

This and further objects are attained, according to the invention, by means of a device for selecting operation cycles in electrical domestic appliances, such as clothes washing and/or drying machines, cookers and similar appliances, which comprises a separate transmitter element with autonomous power supply, provided with a plurality of selection buttons and an electronic transmission circuit, capable of generating proper coded ultrasonic, infrared or radio-frequency signals according to the particular buttons being operated by the user, and which also comprises a receiver element mounted in the related appliance and provided with an electronic receiving circuit, capable of receiving the signals from said transmitter element and therefore driving the various electrical components in the appliance via power interfaces or similar means according to pre-set sequences.

The selection device referred to is characterized in that it comprises first and second control means which are connected with said selection buttons and said transmission circuit and, respectively, said receiving circuit and said power interfaces, and are so arranged as to allow for the storage of a plurality of optimum operation cycles, said first and second control means being capable of driving said transmission circuit and, respectively, said power interfaces according to the input parameters entered for anyone of said cycles or the specific operation cycles selected through said buttons.

Characteristics and advantages of this invention will become more clearly apparent from the following description given by way of non-limiting example with reference to the accompanying drawings in which:

- Fig. 1 diagrammatically shows the electrical circuit of the transmitter element of the selection device according to the present invention;

- fig. 2 diagrammatically shows the electrical circuit of the receiver element of the selection device according to the present invention.

Referring to the above mentioned figures, a device is used to select operation cycles in electrical domestic appliances such as clothes washing and/or drying machines, cookers and similar appliances, which essentially includes a separate transmitter element 3 as well as a receiver element 4 mounted on the control panel (not shown) of the corresponding appliance.

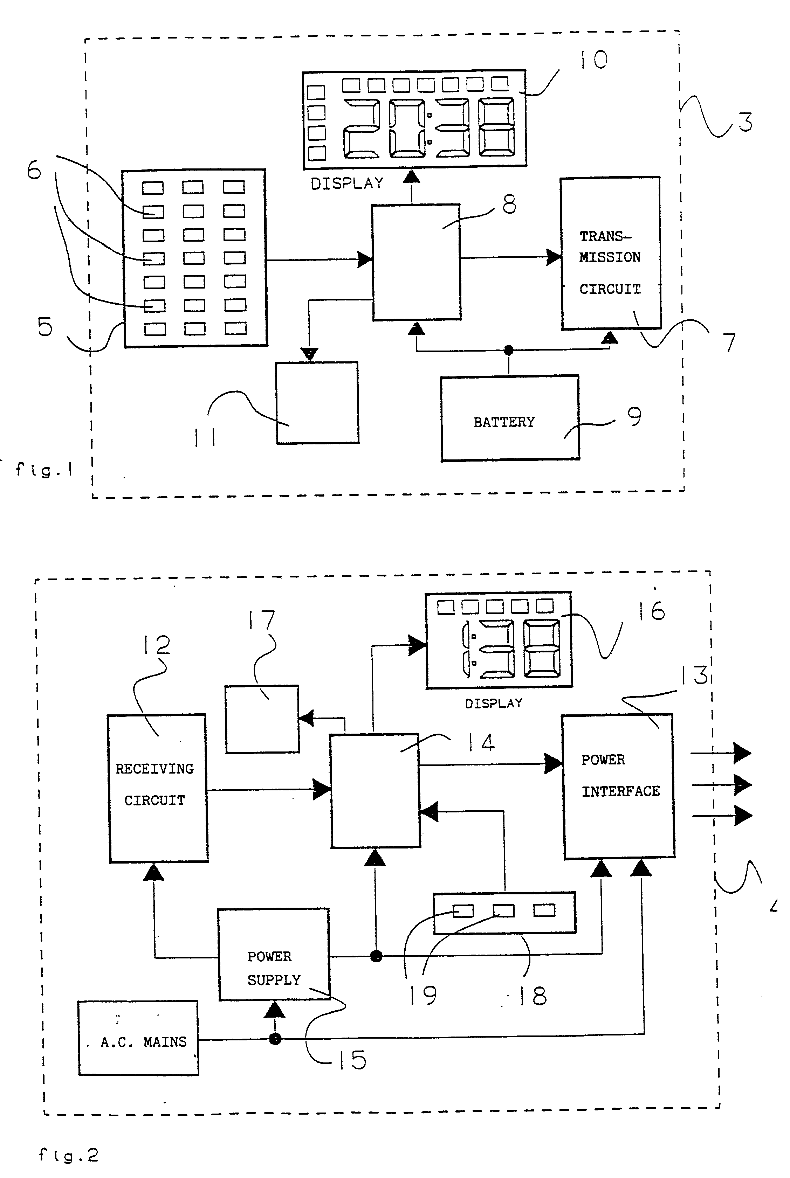

As it may be seen from fig. 1, the transmitter element 3 is formed by a keyboard 5 provided with a plurality of buttons 6 to be manually operated by the user in view of selecting the desired operation cycles as further described below, as well as an electronic transmission circuit 7 interconnected with the keyboard 5 via a first control circuit 8, preferably implemented in the form of an electronic microprocessor of a per se known type.

Such a transmitter circuit further comprises an autonomous power supply, such as a traditional low-voltage battery 9, interconnected with the microprocessor 8 and the transmission circuit 7, as well as a digital display 10 capable of displaying numerical information relating to the duration of the selected cycle and a buzzer 11 or some other suitable alarm device to alert the user when the selected cycle is completed.

In particular, the keys 6 enable the user to select both pre-set operation cycles for washing and/or drying definite quantities of clothes of various type or for cooking definite amounts of food of various kind, and special input parameters which are distinctive of the selectable operation cycles and enable the most appropriate cycle to be each time selected according to special needs.

By way of example, such input parameters for a clothes washing machine may be represented by the type of fabrics, the degree or type of soil on the clothes, the temperature required for washing, the addition or the omission of one or more spin-extraction cycles, the maximum water quantity to be let into the machine's tub according to the actual weight of the laundering load.

Similarly, such input parameters for a clothes drying machine may be represented by the maximum drying time and the type of fabrics to be handled.

Said selection buttons on the keyboard further enable the user to start and stop any selected cycle at any time, as well as to cancel an already selected cycle and also to perform other possible functions such as the dispaly of time-to-run, number of selected cycle and similar information.

Again, the transmission circuit 7 of the transmitter element 3 is formed by traditional-type electronic components, which are capable of generating suitably coded ultrasonic, infrared or radio-frequency signals according to the buttons operated by the user, under the control of the microprocessor 8.

In particular, such a microprocessor is so arranged as to allow for preliminary storage of a plurality of optimally designed operation cycles based on both practical know-how and the recommendations of various research and standardizations bodies, which will in each case ensure the best possible clothes washing and/or drying results in the case of a washing and/or drying machine, or the best possible food cooking results in the case of a cooker, under the lowest possible energy consumption and cycle time requirements.

Under these circumstances, such operating cycles can then be directly selected by the user through the proper actuation of the corresponding buttons 6 provided on the keyboard 5, or they can be automatically selected by the microprocessor 8 based on the input parameters entered in the microprocessor itself through the actuation of the corresponding buttons.

The corresponding electrical signals generated by the microprocessor 8 are displayed on the digital display 10 in the form of numerical information indicating the number of the selected cycle and the time-to-run of the on-going cycle.

Such a microprocessor further generates corresponding electrical driving signals that are applied to the transmission circuit 7 for generating the previously described coded signals.

Looking now at Fig. 2, it can be seen that the receiver element 4 is formed by an electronic receiving circuit 12 interconnected with at least a power interface 13 or similar device, which in turn is interconnected with the various electrical components provided in the corresponding clothes washing and/or drying machine, or food cooking appliance, to control its function.

The receiver circuit 4 further includes a second control means 14, which is preferably implemented in the form of a conventional type electronic microprocessor, which is placed between the receiving circuit 12 and the interface 13 and is connected to the same power supply source as the related appliance through a conventional-type power supply 15.

The microprocessor 14 is again connected with both a display 16 and an acoustic or other alarm device 17, performing the same functions as the ones provided in the transmitter element 3, and an additional keyboard 18 provided on the control panel of the related appliance and featuring a number of buttons 19 for entering the input parameters in the microprocessor 14 or directly selecting an optimized working cycle without using the transmitter element 3.

The purpose of the receiving circuit 12 is to receive the signals from the transmitter element 3 in order to drive, through the power interface 13, the various power components in the appliance and cause them to operate according to pre-set sequences, under the influence of the microprocessor 14.

In particular, this microprocessor is arranged and operates much in the same way as the microprocessor 8 of the transmitter element 12 and, in presence of the signals received by the receiving circuit 12, it stores the corresponding information relating to the selected cycles and drives the power interface 13 accordingly, in order to control the execution of the selected cycle sequences in the appliance in the above described way.

Said microprocessor will also store the cycle information and control the execution of the selected cycle sequences in the appliance when the cycle in selected through direct actuation of the buttons 19 on the control panel of the appliance, without using the transmitter element 3.

It is therefore quite apparent that the cycle selection device according to the present invention enables optimized working cycles to be each time selected for handling any kind, type and quantity of clothes to be washed and/or dried or food to be cooked.

Further advantages of this device derive from the possibility of controlling the appliances from remote locations in a very convenient way owing to the handiness of the related controls, as well as the fact that it can be used in connection with different types of appliances.

## Claims

1. Device for the selection of operation cycles in electrical domestic appliances such as clothes washing and/or drying machines, cookers and similar appliances, which comprises a separate transmitter element with autonomous power supply, provided with a plurality of selection buttons and an electronic transmission circuit, capable of generating proper coded ultrasonic, infrared or radio-frequency signals according to the particular buttons being operated by the user, and wich also comprises a receiver element mounted in the related appliance and provided with an electronic receiving circuit, capable of receiving the signals from said transmitter element and therefore driving the various electrical components in the appliance via power interfaces or similar means according to preset sequences, characterized in that it comprises first and second control means (8, 14) which are connected with said selection buttons (6) and said transmission circuit (7) and, respectively, said receiving circuit (12) and said power interfaces (13), and are so arranged as to allow for the storage of a plurality of optimum operation cycles, said first and second control means (8, 14) being capable of driving said transmission circuit (7) and, respectively, said power interfaces (13) according to the input parameters entered for anyone of said cycles or the specific operation cycles selected through said buttons (6).

2. Device according to claim 1, characterized in that said first and second control means (8,14) are each one of them preferably implemented in the form of a conventional-type electronic microprocessor, which is connected with its own display device (10, 16) and its own acoustic or other type of alarm device (11, 17).

fig.1

fig.2